# FASCICULE DE BREVET EUROPEEN

(11) **EP 3 607 282 B1**
(45) Date de publication et mention de la délivrance du brevet: **11.09.2024**
(21) Numéro de dépôt: 18718886.7
(22) Date de dépôt: 29.03.2018
(51) Int. Cl.: G01F 22/02, G01F 13/00, G01F 15/00, F17C 5/06

(54) **PROCÉDÉ POUR MESURER LA QUANTITÉ DE GAZ INTRODUITE DANS UN RÉSERVOIR ET STATION DE REMPLISSAGE**
VERFAHREN ZUR MESSUNG DER IN EIN RESERVOIR UND EINER UND FÜLLSTATION EINGELEITETEN GASMENGE
METHOD FOR MEASURING THE QUANTITY OF GAS INTRODUCED INTO A RESERVOIR AND FILLING STATION

(30) Priorité: 07.04.2017 FR 1753045
(43) Date de publication de la demande: 12.02.2020
(73) Titulaire: L'AIR LIQUIDE, Société Anonyme pour l'Etude et l'Exploitation des Procédés Georges Claude, 75007 Paris (FR)
(72) Inventeur: FRANCOIS, Thibaut, 38120 Fontanil Cornillon (FR)
(74) Mandataire: Air Liquide
(86) Numéro de dépôt international: PCT/FR2018/050774
(87) Numéro de publication internationale: WO 2018/185404

(56) Documents cités:
- JP-A- 2004 257 525
- JP-A- 2007 024 152
- JP-A- 2007 024 152
- JP-A- 2014 043 882
- JP-A- 2014 043 882
- US-A1- 2009 084 194
- US-A1- 2009 084 194

## Description

L'invention concerne un procédé pour mesurer la quantité de gaz introduite dans un réservoir ainsi qu'une station de remplissage.

L'invention concerne plus particulièrement un procédé pour mesurer la quantité de gaz introduite dans un réservoir de gaz via une station de remplissage munie d'un conduite de remplissage comprenant une extrémité amont reliée à au moins une source de gaz sous pression et une extrémité aval raccordée à un réservoir à remplir, la conduite de remplissage comprenant un débitmètre et au moins une vanne d'isolation aval disposée entre le débitmètre et l'extrémité aval de la conduite de remplissage, le procédé comprenant une étape de transfert de gaz depuis la source vers un réservoir durant laquelle la vanne d'isolation aval est ouverte, une étape d'interruption du transfert de gaz avec une fermeture de vanne aval, le procédé comprenant une étape de mesure, par le débitmètre, de la quantité de gaz transférée au cours de l'étape de transfert.

Un tel procédé est connu du document JP2004257525A.

Les stations de remplissage de réservoirs de gaz sous pression, notamment les réservoirs de gaz carburant de véhicules, nécessitent de mesurer la quantité de gaz introduite dans le réservoir avec un niveau de précision relativement élevé. Ceci s'applique en particulier au remplissage de réservoirs d'hydrogène gazeux sous pression.

Cette quantité doit être mesurée en vue de sa facturation (de la même façon qu'un carburant liquide).

Dans le cas d'un gaz, par exemple l'hydrogène, de nombreux paramètres ont de l'influence sur la mesure de cette quantité (pression, température, volume, débit...).

Cette quantité dépend en particulier des conditions initiales (pression dans le réservoir avant remplissage notamment) et finales (pression après remplissage notamment). Cette quantité est également difficile à mesurer car généralement une quantité de gaz présente dans le circuit est purgée à l'extérieur après le remplissage. Cette purge est prévue pour abaisser la pression dans le flexible de la conduite de remplissage pour permettre à l'utilisateur de déconnecter l'extrémité de la conduite de remplissage du réservoir.

Idéalement il faudrait mesurer le débit de gaz transféré au plus près du réservoir (au niveau de la buse de remplissage). Cependant, pour des raisons industrielles et techniques cette mesure de débit est en fait réalisée plus en amont. Ainsi, une partie du gaz mesuré par le débitmètre n'est pas transférée dans le réservoir et risque d'être facturée au client.

Pour mesurer au plus juste la quantité de gaz transférée (et donc facturée) il est connu de ne pas compter le gaz qui est utilisé le cas échéant lors de test avant le remplissage (des impulsions de gaz peuvent être prévues pour des tests d'étanchéité et/ou pour calculer le volume du réservoir ou d'autres paramètres).

Un but de l'invention est de proposer un procédé et/ou un dispositif permettant une amélioration de précision de la mesure de cette quantité de gaz réellement fournie au réservoir.

Un but de la présente invention est de pallier tout ou partie des inconvénients de l'art antérieur relevés ci-dessus.

Ces buts sont atteints par l'objet de la revendication 1.

Par ailleurs, des modes de réalisation de l'invention peuvent comporter l'une ou plusieurs des caractéristiques suivantes :
- le signal de quantité de gaz transféré corrigée est stocké et/ou transmis et/ou affiché,
- le signal de quantité de gaz transféré corrigée est utilisé dans une étape de calcul d'une facturation de la quantité de gaz introduite dans le réservoir,
- la quantité déterminée corrective de gaz est une quantité qui varie en fonction de la température du gaz dans le réservoir à remplir ou dans la conduite de remplissage,
- la quantité déterminée corrective de gaz est calculée par une équation des gaz parfaits ou réels appliquée au gaz dans la partie aval de la conduite de remplissage avant l'étape de purge et après l'étape de purge à partir des paramètres suivants : le volume connu de la conduite de remplissage en aval de la vanne d'isolation aval, la pression finale mesurée dans le réservoir à remplir ou dans la conduite de remplissage à la fin de l'étape de transfert avant l'étape de purge, la température mesurée ou estimée du gaz dans le réservoir à remplir ou dans la conduite de remplissage, la nature connue du gaz et notamment sa masse molaire, la pression dans la conduite de remplissage après l'étape de purge et en ce que la quantité corrective est le résultat de la différence entre la quantité calculée de gaz présent dans la partie aval de la conduite de remplissage avant l'étape de purge et la quantité calculée de gaz présent dans la dans la partie aval de la conduite de remplissage après l'étape de purge,
- la conduite de remplissage comprend un débitmètre de purge situé en aval de la vanne de purge pour mesurer la quantité de gaz purgé lors de l'étape de purge et en ce que la quantité déterminée corrective de gaz est la quantité de gaz mesurée par le débitmètre de purge ou une fraction déterminée de celle-ci,
- la génération d'un signal de quantité de gaz transférée corrigée est obtenue en soustrayant ou en ajoutant une quantité déterminée de gaz à la quantité de gaz transféré mesurée par le débitmètre au cours de l'étape de transfert,
- le débitmètre est du type générant des signaux électriques sous forme d'impulsions successives correspondant chacune à une quantité élémentaire de gaz mesurée, la génération d'un signal de quantité de gaz transférée corrigée étant obtenue en soustrayant ou en ajoutant une quantité déterminée d'impulsions à la somme d'impulsions générées par le débitmètre au cours de l'étape de transfert,
- la station de remplissage comprend un dispositif électronique de traitement et de stockage de données, comprenant notamment un microprocesseur ou un ordinateur, ledit dispositif électronique étant configuré pour recevoir un signal représentatif de la quantité de gaz transféré mesurée par le débitmètre au cours de l'étape de transfert et pour calculer et/ou recevoir et/ou transmettre et/ou afficher le signal de quantité de gaz transféré corrigée,

L'invention concerne également une station de remplissage de réservoirs de fluide sous pression, notamment pour le remplissage de réservoirs d'hydrogène sous pression, comportant une conduite de remplissage comprenant une extrémité amont reliée à au moins une source de gaz sous pression et au moins une extrémité aval destinée à être raccordée à un réservoir à remplir, la conduite de remplissage comprenant un débitmètre et au moins une vanne d'isolation aval disposée entre le débitmètre et l'extrémité aval de la conduite de remplissage, la au moins une vanne étant pilotée pour permettre une étape de transfert de gaz depuis la source vers le réservoir, le débitmètre étant configuré pour mesurer la quantité de gaz transférée et générer un signal correspondant, la station comprenant un dispositif électronique de traitement et de stockage de données, comprenant notamment un microprocesseur ou un ordinateur, le dispositif électronique étant configuré pour recevoir le signal du débitmètre et pour générer un signal de quantité de gaz transféré corrigée obtenu en réduisant ou en augmentant d'une quantité déterminée corrective la quantité de gaz transféré mesurée par le débitmètre au cours du transfert.

Selon l'invention, la pression finale dans le réservoir ou dans la conduite de remplissage à la fin de l'étape de transfert est mesurée ou estimée. La quantité déterminée corrective est une quantité qui varie en fonction de cette pression finale, notamment proportionnellement. En outre, la quantité déterminée corrective est une quantité prédéterminée fixe selon l'intervalle de pression à la fin de l'étape de transfert et comprise entre 11 et 5 grammes lorsque la pression dans le réservoir à remplir ou dans la conduite de remplissage est comprise entre 850 et 700 bar, et comprise entre 8 et 2,5 grammes lorsque la pression dans le réservoir à remplir ou dans la conduite de remplissage est comprise entre 700 et 400 bar, et comprise entre 6 et 1 gramme lorsque la pression dans le réservoir à remplir ou dans la conduite de remplissage est comprise entre 400 et 200 bar.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant un exemple de structure et de fonctionnement d'une station de remplissage selon un premier mode de réalisation possible de l'invention,
- la figure 2 représente une vue schématique et partielle illustrant un exemple de structure et de fonctionnement d'une station de remplissage selon un second mode de réalisation possible de l'invention.

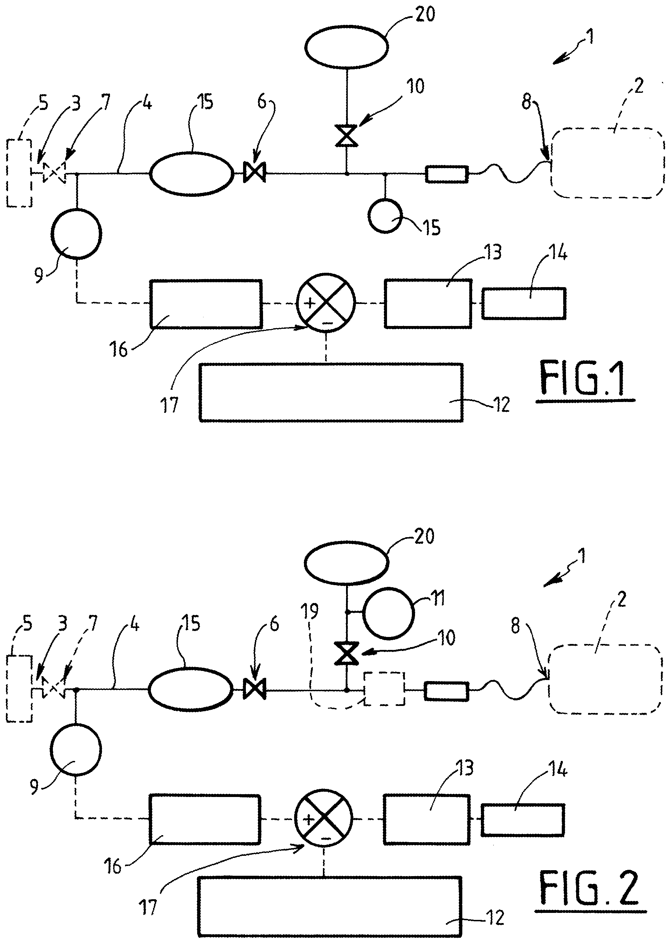

La station 1 de remplissage de réservoirs de fluide sous pression schématisée à la figure 1 comprend classiquement une conduite 4 de remplissage comprenant au moins une extrémité 3 amont reliée à au moins une source 5 de gaz sous pression et au moins une extrémité 8 aval destinée à raccordée à un réservoir 2 à remplir.

La source de gaz (hydrogène notamment) peut comprendre au moins l'un parmi : un ou plusieurs réservoirs de gaz sous pression, notamment plusieurs réservoirs raccordés en parallèle pour un remplissage en cascade, un compresseur, une source de gaz liquéfié et un vaporiseur, et/ou tout autre source de gaz sous pression appropriée.

L'extrémité aval comprend par exemple au moins un tuyau flexible dont l'extrémité terminale comprend un raccord, de préférence un raccord rapide, permettant sa liaison étanche avec l'entrée d'un réservoir 2 ou d'un circuit de remplissage d'un réservoir 2 (notamment de véhicule).

La conduite 4 de remplissage comprenant un débitmètre 9 et au moins une vanne 6 d'isolation aval disposée entre le débitmètre et l'extrémité aval 8 de la conduite 4 de remplissage. La vanne 6 d'isolation est de préférence une vanne 6 pilotée pour permettre une étape de transfert de gaz depuis la source 5 vers le réservoir 2 lorsqu'elle est ouverte.

Le débitmètre 9, de préférence du type à effet Coriolis est configuré pour mesurer la quantité de gaz transférée et générer un signal correspondant (un signal électrique de préférence).

La station 1 comprend un dispositif 12 électronique de traitement et de stockage de données, comprenant notamment un microprocesseur ou un ordinateur. Ce dispositif 12 électronique est configuré pour recevoir le signal du débitmètre 9 et pour générer un signal de quantité de gaz transféré corrigée obtenu en réduisant ou en augmentant d'une quantité déterminée corrective la quantité de gaz transféré mesurée par le débitmètre 9 au cours du transfert.

De préférence le dispositif 12 électronique peut être configuré pour commander tout ou partie des vannes 6, 10 ou organes de la station et/ou pour recevoir des mesures 15 de pression et/ou de température dans le circuit 4 de remplissage (en amont et/ou en aval de la vanne 6 d'isolation aval). En particulier, préférence le dispositif 12 électronique peut être configuré pour commander le transfert de gaz vers le réservoir (contrôle du débit et/ou des sources...).

De plus, le dispositif 12 électronique peut comprendre ou être associé à une interface homme machine comprenant par exemple un afficheur 13 et/ou un terminal 14 de paiement et/ou de saisie ou d'identification. Le dispositif 12 électronique peut comprendre des moyens de communication sans fil pour transmettre ou recevoir ces données ou/ou d'autres données. En particulier, tout ou partie des moyens de calcul et/ou de stockage de données et/ou d'affichage et/ou de facturation peuvent être déportés de la station 1 (via internet ou un réseau local et utilisant par exemple des applications sur téléphone sans fil)

Comme illustré, la conduite 4 de remplissage comprend également de préférence en outre une vanne 10 de purge située en aval de la vanne 6 d'isolation aval.

La vanne 10 de purge est de préférence commandée pour évacuer à l'extérieur de la conduite 4 de remplissage au moins une partie du gaz sous pression emprisonné dans la partie aval de conduite 4 de remplissage après une étape de transfert (à la fin d'un remplissage). Le gaz purgé est évacué à l'atmosphère ou dans une zone 20 de récupération.

En réduisant ou en augmentant d'une quantité déterminée corrective la quantité de gaz transféré mesurée par le débitmètre 9 au cours de l'étape de transfert il est ainsi possible d'afficher et/ou de facturer à l'utilisateur une quantité de gaz qui est plus proche ou égale à la quantité de gaz réellement transférée dans le réservoir 2.

Cette quantité corrective est une quantité fixe ou un pourcentage (fixe ou variable) qui est fonction (qui varie) selon les conditions de remplissage et notamment la pression finale.

Ainsi, dans le cas où différents réservoirs sont remplis à des pressions différentes, les quantités déterminées correctives seront différentes.

La pression finale dans le réservoir 2 ou dans la conduite 4 de remplissage à la fin de l'étape de transfert est mesurée 15 (ou estimée) et la quantité déterminée corrective est une quantité qui varie en fonction de cette pression finale, notamment proportionnellement. De même, la quantité déterminée corrective est une quantité fixe selon l'intervalle de la pression finale à la fin de l'étape de transfert.

De même,_la quantité déterminée corrective est une quantité fixe selon l'intervalle de pression à la fin de l'étape de transfert et comprise entre 11 et 5 grammes lorsque la pression dans le réservoir à remplir ou dans la conduite 4 de remplissage est comprise entre 850 et 700 bar et comprise entre 8 et 2,5 grammes lorsque la pression dans le réservoir 2 à remplir ou dans la conduite 4 de remplissage est comprise entre 700 et 400 bar et comprise entre 6 et 1 gramme lorsque la pression dans le réservoir 2 à remplir ou dans la conduite 4 de remplissage est comprise entre 400 et 200 bar.

La quantité déterminée corrective de gaz peut éventuellement varier également en fonction de la température du gaz dans le réservoir 2 à remplir ou dans la conduite 4 de remplissage.

La quantité déterminée corrective de gaz peut éventuellement varier en fonction du volume du réservoir 2 (connu ou mesuré) et/ou du volume connu ou mesuré du circuit 4 de remplissage.

Selon un mode de réalisation non revendiqué, la quantité déterminée corrective de gaz peut être la quantité de gaz calculée ou mesurée évacuée via la vanne 10 de purge.

Par exemple la quantité de gaz purgée peut être estimée à partir du volume connu dans le circuit 4 entre la vanne 6 d'isolation aval et l'extrémité 8 aval, de la pression 15 mesurée dans cette partie de circuit 4, de la température mesurée ou estimée dans cette partie de circuit 4, des caractéristiques du gaz (sa nature, sa masse molaire...), et de la pression finale dans la conduite 4 après l'étape de transfert et après l'étape de purge. Sur la base de ces paramètres la densité et/ou la masse de gaz purgée peut être calculée. Par exemple, la quantité déterminée corrective de gaz est calculée par une équation d'état du gaz. Par exemple cette quantité est calculée via l'équation des gaz parfaits ou réels appliquée au gaz dans la partie aval de la conduite de remplissage avant l'étape de purge et après l'étape de purge à partir des paramètres suivants : le volume connu de la conduite de remplissage en aval de la vanne 6 d'isolation aval, la pression finale mesurée dans le réservoir 2 à remplir ou dans la conduite 4 de remplissage à la fin de l'étape de transfert avant l'étape de purge, la température mesurée ou estimée du gaz dans le réservoir 2 à remplir ou dans la conduite 4 de remplissage, la nature connue du gaz et notamment sa masse molaire, la pression dans la conduite 4 de remplissage après l'étape de purge. La quantité corrective peut être le résultat de la différence entre la quantité calculée de gaz présent dans la partie aval de la conduite 4 de remplissage avant l'étape de purge et la quantité calculée de gaz présent dans la dans la partie aval de la conduite 4 de remplissage après l'étape de purge.

Comme illustré à la figure 2, la station peut comprendre un second débitmètre 11 de purge situé en aval de la vanne 10 de purge configuré pour mesurer la quantité de gaz purgé lors de l'étape de purge. La quantité déterminée corrective de gaz est par exemple la quantité de gaz mesurée par le débitmètre 11 de purge ou une fraction déterminée de celle-ci.

La génération d'un signal de quantité de gaz transféré corrigée est obtenue en soustrayant ou en ajoutant une quantité déterminée de gaz à la quantité de gaz transféré mesurée par le débitmètre 9 au cours de l'étape de transfert.

Cette correction peut être réalisée à la fin de l'étape de transfert et/ou de façon dynamique pendant le transfert de gaz (par exemple de façon progressive).

De préférence le débitmètre 9 est du type générant des signaux électriques sous forme d'impulsions successives (« pulses ») correspondant chacune à une quantité élémentaire de gaz mesurée. C'est-à-dire que, à chaque fois que le débitmètre mesure le passage d'une quantité de gaz (par exemple un gramme) il émet une impulsion. Le débit correspond au nombre d'impulsions par unité de temps (par exemple un certain nombre de grammes par minutes).

Le signal de quantité de gaz transféré corrigée peut être obtenu en soustrayant ou en ajoutant une quantité déterminée d'impulsions à la somme d'impulsions générées par le débitmètre 9 au cours de l'étape de transfert.

Comme schématisé aux figures, le dispositif 12 électronique de traitement et de stockage de données peut comprendre ou être associé un organe 16 de comptage des impulsions et un organe 17 de correction des impulsions comptabilisées (ce ou ces organes 16, 17 peuvent comprendre des cartes électroniques ou tout autre dispositif approprié).

Bien entendu le circuit 4 de remplissage peut comporter d'autre(s) éléments et notamment vanne(s) 7 en amont ou en aval de la vanne 6 d'isolation aval et/ou un volume tampon entre le débitmètre 9 et la vanne 6 d'isolation aval, un échangeur 19 de refroidissement du gaz en aval de la vanne 6 d'isolation aval ...

## Revendications

1. Procédé pour mesurer la quantité de gaz introduite dans un réservoir (2) de gaz via une station (1) de remplissage munie d'un conduite (4) de remplissage comprenant une extrémité (3) amont reliée à au moins une source (5) de gaz sous pression et une extrémité (8) aval raccordée à un réservoir (2) à remplir, la conduite (4) de remplissage comprenant un débitmètre (9) et au moins une vanne (6) d'isolation aval disposée entre le débitmètre et l'extrémité aval (8) de la conduite de remplissage, le procédé comprenant une étape de transfert de gaz depuis la source (5) vers un réservoir (2) durant laquelle la vanne (6) d'isolation aval est ouverte, une étape d'interruption du transfert de gaz avec une fermeture de vanne (6) aval, le procédé comprenant une étape de mesure, par le débitmètre (9), de la quantité de gaz transférée au cours de l'étape de transfert, le procédé comprenant une étape de génération d'un signal de quantité de gaz transféré corrigée obtenu en réduisant ou en augmentant d'une quantité déterminée corrective la quantité de gaz transféré mesurée par le débitmètre (9) au cours de l'étape de transfert, le procédé comprenant une étape dans laquelle la pression finale dans le réservoir (2) ou dans la conduite (4) de remplissage à la fin de l'étape de transfert est mesurée ou estimée et la quantité déterminée corrective est une quantité qui varie en fonction de cette pression finale et **caractérisé en ce que** la quantité déterminée corrective est une quantité prédéterminée fixe selon l'intervalle de pression à la fin de l'étape de transfert et comprise entre 11 et 5 grammes lorsque la pression dans le réservoir à remplir ou dans la conduite (4) de remplissage est comprise entre 850 et 700 bar et comprise entre 8 et 2,5 grammes lorsque la pression dans le réservoir (2) à remplir ou dans la conduite (4) de remplissage est comprise entre 700 et 400bar et comprise entre 6 et 1 gramme lorsque la pression dans le réservoir (2) à remplir ou dans la conduite (4) de remplissage est comprise entre 400 et 200bar.

2. Procédé selon la revendication 1, **caractérisé en ce que** le signal de quantité de gaz transféré corrigée est stocké et/ou transmis et/ou affiché.

3. Procédé selon la revendication 1 ou 2, **caractérisé en ce que** le signal de quantité de gaz transféré corrigée est utilisé dans une étape de calcul d'une facturation de la quantité de gaz introduite dans le réservoir (2).

4. Procédé selon l'une quelconque des revendications 1 à 3, **caractérisé en ce que** la quantité déterminée corrective de gaz est une quantité qui varie en fonction de la température du gaz dans le réservoir (2) à remplir ou dans la conduite (4) de remplissage.

5. Procédé selon l'une quelconque des revendications 1 à 4, **caractérisé en ce que** la quantité déterminée corrective de gaz est calculée par une équation des gaz parfaits ou réels appliquée au gaz dans la partie aval de la conduite de remplissage avant l'étape de purge et après l'étape de purge à partir des paramètres suivants : le volume connu de la conduite de remplissage en aval de la vanne (6) d'isolation aval, la pression finale mesurée dans le réservoir (2) à remplir ou dans la conduite (4) de remplissage à la fin de l'étape de transfert avant l'étape de purge, la température mesurée ou estimée du gaz dans le réservoir (2) à remplir ou dans la conduite (4) de remplissage, la nature connue du gaz et notamment sa masse molaire, la pression dans la conduite (4) de remplissage après l'étape de purge et **en ce que** la quantité corrective est le résultat de la différence entre la quantité calculée de gaz présent dans la partie aval de la conduite (4) de remplissage avant l'étape de purge et la quantité calculée de gaz présent dans la dans la partie aval de la conduite (4) de remplissage après l'étape de purge.

6. Procédé selon la revendication 5, **caractérisé en ce que** la conduite (4) de remplissage comprend un débitmètre (11) de purge situé en aval de la vanne (10) de purge pour mesurer la quantité de gaz purgé lors de l'étape de purge et **en ce que** la quantité déterminée corrective de gaz est la quantité de gaz mesurée par le débitmètre (11) de purge ou une fraction déterminée de celle-ci.

7. Procédé selon l'une quelconque des revendications précédentes, **caractérisé en ce que** la génération d'un signal de quantité de gaz transférée corrigée est obtenue en soustrayant ou en ajoutant une quantité déterminée de gaz à la quantité de gaz transféré mesurée par le débitmètre (9) au cours de l'étape de transfert.

8. Procédé selon la revendication 7, **caractérisé en ce que** le débitmètre (9) est du type générant des signaux électriques sous forme d'impulsions successives correspondant chacune à une quantité élémentaire de gaz mesurée et **en ce que** ce que la génération d'un signal de quantité de gaz transférée corrigée est obtenu en soustrayant ou en ajoutant une quantité déterminée d'impulsions à la somme d'impulsions générées par le débitmètre (9) au cours de l'étape de transfert.

9. Procédé selon l'une quelconque des revendications 1 à 8, **caractérisé en ce que** la station (1) de remplissage comprend un dispositif (12) électronique de traitement et de stockage de données, comprenant notamment un microprocesseur ou un ordinateur, ledit dispositif (12) électronique étant configuré pour recevoir un signal représentatif de la quantité de gaz transféré mesurée par le débitmètre (9) au cours de l'étape de transfert et pour calculer et/ou recevoir et/ou transmettre et/ou afficher le signal de quantité de gaz transféré corrigée.

10. Station de remplissage de réservoirs de fluide sous pression, notamment pour le remplissage de réservoirs d'hydrogène sous pression, comportant une conduite (4) de remplissage comprenant une extrémité (3) amont reliée à au moins une source (5) de gaz sous pression et au moins une extrémité (8) aval destinée à être raccordée à un réservoir (2) à remplir, la conduite (4) de remplissage comprenant un débitmètre (9) et au moins une vanne (6) d'isolation aval disposée entre le débitmètre et l'extrémité aval (8) de la conduite de remplissage, la au moins une vanne (6) étant pilotée pour permettre une étape de transfert de gaz depuis la source (5) vers le réservoir (2), le débitmètre (9) étant configuré pour mesurer la quantité de gaz transférée et générer un signal correspondant, la station (1) comprenant un dispositif (12) électronique de traitement et de stockage de données, comprenant notamment un microprocesseur ou un ordinateur, le dispositif (12) électronique étant configuré pour recevoir le signal du débitmètre et pour générer un signal de quantité de gaz transféré corrigée obtenu en réduisant ou en augmentant d'une quantité déterminée corrective la quantité de gaz transféré mesurée par le débitmètre (9) au cours du transfert, la pression finale dans le réservoir (2) ou dans la conduite (4) de remplissage à la fin de l'étape de transfert étant mesurée ou estimée, la quantité déterminée corrective étant une quantité qui varie en fonction de cette pression finale, notamment proportionnellement, et **caractérisée en ce que** la quantité déterminée corrective est une quantité prédéterminée fixe selon l'intervalle de pression à la fin de l'étape de transfert et comprise entre 11 et 5 grammes lorsque la pression dans le réservoir à remplir ou dans la conduite (4) de remplissage est comprise entre 850 et 700 bar et comprise entre 8 et 2,5 grammes lorsque la pression dans le réservoir (2) à remplir ou dans la conduite (4) de remplissage est comprise entre 700 et 400 bar et comprise entre 6 et 1 gramme lorsque la pression dans le réservoir (2) à remplir ou dans la conduite (4) de remplissage est comprise entre 400 et 200 bar.

## Patentansprüche

1. Verfahren zum Messen der Gasmenge, die in einen Tank (2) für Gas über eine Füllstation (1) eingeführt wird, die mit einer Füllleitung (4) versehen ist, die ein stromaufwärtiges Ende (3), das mit mindestens einer Quelle (5) für Gas unter Druck verbunden ist, und ein stromabwärtiges Ende (8), das an einen zu befüllenden Tank (2) angeschlossen ist, umfasst, wobei die Füllleitung (4) einen Durchflussmesser (9) und mindestens ein stromabwärtiges Absperrventil (6), das zwischen dem Durchflussmesser und dem stromabwärtigen Ende (8) der Füllleitung angeordnet ist, umfasst, wobei das Verfahren einen Schritt des Transfers von Gas von der Quelle (5) zu einem Tank (2), während dessen das stromabwärtige Absperrventil (6) geöffnet ist, einen Schritt des Unterbrechens des Transfers von Gas mit einem Schließen des stromabwärtigen Ventils (6) umfasst, wobei das Verfahren einen Schritt des Messens, durch den Durchflussmesser (9), der während des Transferschritts transferierten Gasmenge umfasst, wobei das Verfahren einen Schritt des Erzeugens eines Signals für eine korrigierte Menge transferierten Gases umfasst, das erhalten wird, indem die während des Transferschritts von dem Durchflussmesser (9) gemessene Menge transferierten Gases um eine bestimmte korrigierende Menge vermindert oder erhöht wird, wobei das Verfahren einen Schritt umfasst, bei dem der finale Druck in dem Tank (2) oder in der Füllleitung (4) am Ende des Transferschritts gemessen oder geschätzt wird und die bestimmte korrigierende Menge eine Menge ist, die in Abhängigkeit von diesem finalen Druck variiert, und **dadurch gekennzeichnet, dass** die bestimmte korrigierende Menge eine feststehende vorbestimmte Menge gemäß dem Druckintervall am Ende des Transferschritts ist und zwischen 11 und 5 Gramm beträgt, wenn der Druck in dem zu befüllenden Tank oder in der Füllleitung (4) zwischen 850 und 700 bar beträgt, und zwischen 8 und 2,5 Gramm, wenn der Druck in dem zu befüllenden Tank (2) oder in der Füllleitung (4) zwischen 700 und 400 bar beträgt, und zwischen 6 und 1 Gramm, wenn der Druck in dem zu befüllenden Tank (2) oder in der Füllleitung (4) zwischen 400 und 200 bar beträgt.

2. Verfahren nach Anspruch 1, **dadurch gekennzeichnet, dass** das Signal für die korrigierte Menge transferierten Gases gespeichert und/oder übertragen und/oder angezeigt wird.

3. Verfahren nach einem der Ansprüche 1 oder 2, **dadurch gekennzeichnet, dass** das Signal für die korrigierte Menge transferierten Gases in einem Schritt des Berechnens einer Fakturierung der in den Tank (2) eingeführten Gasmenge verwendet wird.

4. Verfahren nach einem der Ansprüche 1 bis 3, **dadurch gekennzeichnet, dass** die bestimmte korrigierende Gasmenge eine Menge ist, die in Abhängigkeit von der Temperatur des Gases in dem zu befüllenden Tank (2) oder in der Füllleitung (4) variiert.

5. Verfahren nach einem der Ansprüche 1 bis 4, **dadurch gekennzeichnet, dass** die bestimmte korrigierende Gasmenge durch eine Gleichung idealer oder realer Gase berechnet wird, die auf das Gas in dem stromabwärtigen Teil der Füllleitung vor dem Entlüftungsschritt und nach dem Entlüftungsschritt ausgehend von den folgenden Parametern angewandt wird: bekanntes Volumen der Füllleitung stromab des stromabwärtigen Absperrventils (6), gemessener finaler Druck in dem zu befüllenden Tank (2) oder in der Füllleitung (4) am Ende des Transferschritts vor dem Entlüftungsschritt, gemessene oder geschätzte Temperatur des Gases in dem zu befüllenden Tank (2) oder in der Füllleitung (4), bekannte Art des Gases und insbesondere seine molare Masse, Druck in der Füllleitung (4) nach dem Entlüftungsschritt, und dadurch, dass die korrigierende Menge das Ergebnis der Differenz zwischen der berechneten Gasmenge, die in dem stromabwärtigen Teil der Füllleitung (4) vor dem Entlüftungsschritt vorhanden ist, und der berechneten Gasmenge, die in dem stromabwärtigen Teil der Füllleitung (4) nach dem Entlüftungsschritt vorhanden ist, ist.

6. Verfahren nach Anspruch 5, **dadurch gekennzeichnet, dass** die Füllleitung (4) einen Entlüftungsdurchflussmesser (11) umfasst, der stromab des Entlüftungsventils (10) gelegen ist, um die bei dem Entlüftungsschritt entlüftete Gasmenge zu messen, und dass die bestimmte korrigierende Gasmenge die von dem Entlüftungsdurchflussmesser (11) gemessene Gasmenge oder ein bestimmter Anteil davon ist.

7. Verfahren nach einem der vorhergehenden Ansprüche, **dadurch gekennzeichnet, dass** das Erzeugen eines Signals für die korrigierte transferierte Gasmenge erhalten wird, indem eine bestimmte Gasmenge von der von dem Durchflussmesser (9) während des Transferschritts gemessenen Menge transferierten Gases subtrahiert oder dazu addiert wird.

8. Verfahren nach Anspruch 7, **dadurch gekennzeichnet, dass** der Durchflussmesser (9) von dem Typ ist, der elektrische Signale in Form von aufeinander folgenden Impulsen erzeugt, die jeweils einer gemessenen elementaren Gasmenge entsprechen, und dass das Erzeugen eines Signals für die korrigierte transferierte Gasmenge erhalten wird, indem eine bestimmte Menge von Impulsen von der Summe der von dem Durchflussmesser (9) während des Transferschritts erzeugten Impulsen subtrahiert oder dazu addiert wird.

9. Verfahren nach einem der Ansprüche 1 bis 8, **dadurch gekennzeichnet, dass** die Füllstation (1) eine elektronische Vorrichtung (12) zur Verarbeitung und Speicherung von Daten umfasst, die insbesondere einen Mikroprozessor oder einen Computer umfasst, wobei die elektronische Vorrichtung (12) dazu ausgestaltet ist, ein Signal zu empfangen, das für die von dem Durchflussmesser (9) während des Transferschritts gemessene Menge transferierten Gases repräsentativ ist, und das Signal für die korrigierte Menge transferierten Gases zu berechnen und/oder zu empfangen und/oder zu übertragen und/oder anzuzeigen.

10. Station zum Befüllen von Tanks mit Fluid unter Druck, insbesondere zum Befüllen von Tanks mit Wasserstoff unter Druck, die eine Füllleitung (4) aufweist, die ein stromaufwärtiges Ende (3), das mit mindestens einer Quelle (5) für Gas unter Druck verbunden ist, und mindestens ein stromabwärtiges Ende (8), das dazu bestimmt ist, an einen zu befüllenden Tank (2) angeschlossen zu werden, umfasst, wobei die Füllleitung (4) einen Durchflussmesser (9) umfasst und mindestens ein stromabwärtiges Absperrventil (6), das zwischen dem Durchflussmesser und dem stromabwärtigen Ende (8) der Füllleitung angeordnet ist, wobei das mindestens eine Ventil (6) angesteuert wird, um einen Schritt des Transfers von Gas von der Quelle (5) zu dem Tank (2) zu ermöglichen, wobei der Durchflussmesser (9) dazu ausgestaltet ist, die transferierte Gasmenge zu messen und ein entsprechendes Signal zu erzeugen, wobei die Station (1) eine elektronische Vorrichtung (12) zur Verarbeitung und Speicherung von Daten umfasst, die insbesondere einen Mikroprozessor oder einen Computer umfasst, wobei die elektronische Vorrichtung (12) dazu ausgestaltet ist, das Signal des Durchflussmessers zu empfangen und ein Signal für die korrigierte Menge transferierten Gases zu erzeugen, das erhalten wird, indem die von dem Durchflussmesser (9) während des Transfers gemessenen Menge transferierten Gases um eine bestimmte korrigierende Menge verringert oder erhöht wird, wobei der finale Druck in dem Tank (2) oder in der Füllleitung (4) am Ende des Transferschritts gemessen oder geschätzt wird, wobei die bestimmte korrigierende Menge eine Menge ist, die in Abhängigkeit von diesem finalen Druck variiert, insbesondere proportional, und **dadurch gekennzeichnet, dass** die bestimmte korrigierende Menge eine feststehende vorbestimmte Menge gemäß dem Druckintervall am Ende des Transferschritts ist und zwischen 11 und 5 Gramm beträgt, wenn der Druck in dem zu befüllenden Tank oder in der Füllleitung (4) zwischen 850 und 700 bar beträgt, und zwischen 8 und 2,5 Gramm, wenn der Druck in dem zu befüllenden Tank (2) oder in der Füllleitung (4) zwischen 700 und 400 bar beträgt, und zwischen 6 und 1 Gramm, wenn der Druck in dem zu befüllenden Tank (2) oder in der Füllleitung (4) zwischen 400 und 200 bar beträgt.

## Claims

1. Method for measuring the quantity of gas introduced into a gas tank (2) via a filling station (1) provided with a filling pipe (4) comprising an upstream end (3) connected to at least one source (5) of pressurized gas and a downstream end (8) connected to a tank (2) to be filled, the filling pipe (4) comprising a flow meter (9) and at least one downstream isolation valve (6) positioned between the flow meter and the downstream end (8) of the filling pipe, the method comprising a step of transferring gas from the source (5) to a tank (2), during which the downstream isolation valve (6) is open, a step of interrupting the transfer of gas with closure of the downstream valve (6), the method comprising a step of measuring, using the flow meter (9), the quantity of gas transferred during the transfer step, the method comprising a step of generating a signal indicating the corrected quantity of gas transferred, which is obtained by reducing or by increasing, by a determined corrective quantity, the transferred quantity of gas measured by the flow meter (9) during the transfer step, the method comprising a step in which the final pressure in the tank (2) or in the filling pipe (4) at the end of the transfer step is measured or estimated, and the determined corrective quantity is a quantity that varies according to this final pressure, and **characterized in that** the determined corrective quantity is a predetermined quantity that is fixed according to the pressure interval at the end of the transfer step and is between 11 and 5 grams when the pressure in the tank to be filled or in the filling pipe (4) is between 850 and 700 bar and between 8 and 2.5 grams when the pressure in the tank (2) to be filled or in the filling pipe (4) is between 700 and 400 bar and between 6 and 1 gram when the pressure in the tank (2) to be filled or in the filling pipe (4) is between 400 and 200 bar.

2. Method according to Claim 1, **characterized in that** the signal indicating the corrected quantity of gas transferred is stored and/or transmitted and/or displayed.

3. Method according to Claim 1 or 2, **characterized in that** the signal indicating the corrected quantity of gas transferred is used in a step of calculating a charge for the quantity of gas introduced into the tank (2).

4. Method according to any one of Claims 1 to 3, **characterized in that** the determined corrective quantity of gas is a quantity that varies according to the temperature of the gas in the tank (2) to be filled or in the filling pipe (4).

5. Method according to any one of Claims 1 to 4, **characterized in that** the determined corrective quantity of gas is calculated by a perfect-gas or real-gas equation applied to the gas in the downstream part of the filling pipe before the purge step and after the purge step on the basis of the following parameters: the known volume of the filling pipe downstream of the downstream isolation valve (6), the measured final pressure in the tank (2) to be filled or in the filling pipe (4) at the end of the transfer step before the purge step, the measured or estimated temperature of the gas in the tank (2) to be filled or in the filling pipe (4), the known nature of the gas and in particular its molar mass, the pressure in the filling pipe (4) after the purge step, and **in that** the corrective quantity is the result of the difference between the calculated quantity of gas present in the downstream part of the filling pipe (4) before the purge step and the calculated quantity of gas present in the downstream part of the filling pipe (4) after the purge step.

6. Method according to Claim 5, **characterized in that** the filling pipe (4) comprises a purge flow meter (11) situated downstream of the purge valve (10) for measuring the quantity of gas purged during the purge step, and **in that** the determined corrective quantity of gas is the quantity of gas measured by the purge flow meter (11) or a determined fraction thereof.

7. Method according to any one of the preceding claims, **characterized in that** the generation of a signal indicating the corrected quantity of gas transferred is obtained by subtracting or by adding a determined quantity of gas from or to the quantity of gas transferred as measured by the flow meter (9) during the transfer step.

8. Method according to Claim 7, **characterized in that** the flow meter (9) is of the type that generates electrical signals in the form of successive pulses each corresponding to an elementary measured quantity of gas, and **in that** the generation of a signal indicating the corrected quantity of gas transferred is obtained by subtracting or by adding a determined quantity of pulses from or to the sum of pulses generated by the flow meter (9) during the transfer step.

9. Method according to any one of Claims 1 to 8, **characterized in that** the filling station (1) comprises an electronic data processing and storage device (12), in particular comprising a microprocessor or a computer, said electronic device (12) being configured to receive a signal representative of the quantity of gas transferred as measured by the flow meter (9) during the transfer step and to calculate and/or receive and/or transmit and/or display the signal indicating the corrected quantity of gas transferred.

10. Station for filling tanks with pressurized fluid, in particular for filling tanks with pressurized hydrogen, having a filling pipe (4) comprising an upstream end (3) connected to at least one source (5) of pressurized gas and at least one downstream end (8) intended to be connected to a tank (2) to be filled, the filling pipe (4) comprising a flow meter (9) and at least one downstream isolation valve (6) positioned between the flow meter and the downstream end (8) of the filling pipe, the at least one valve (6) being operated so as to allow a step of transferring gas from the source (5) to the tank (2), the flow meter (9) being configured to measure the quantity of gas transferred and to generate a corresponding signal, the station (1) comprising an electronic data processing and storage device (12), in particular comprising a microprocessor or a computer, the electronic device (12) being configured to receive the signal from the flow meter and to generate a signal indicating the corrected quantity of gas transferred, which is obtained by reducing or by increasing, by a determined corrective quantity, the transferred quantity of gas measured by the flow meter (9) during the transfer, the final pressure in the tank (2) or in the filling pipe (4) at the end of the transfer step being measured or estimated, the determined corrective quantity being a quantity that varies according to this final pressure, in particular proportionally, and **characterized in that** the determined corrective quantity is a predetermined quantity that is fixed according to the pressure interval at the end of the transfer step and is between 11 and 5 grams when the pressure in the tank to be filled or in the filling pipe (4) is between 850 and 700 bar and between 8 and 2.5 grams when the pressure in the tank (2) to be filled or in the filling pipe (4) is between 700 and 400 bar and between 6 and 1 gram when the pressure in the tank (2) to be filled or in the filling pipe (4) is between 400 and 200 bar.
